(19) Europäisches Patentamt
European Patent Office
Office européen des brevets

(11) **EP 4 141 067 B1**

(12) **EUROPEAN PATENT SPECIFICATION**

(45) Date of publication and mention
of the grant of the patent:
**02.10.2024 Bulletin 2024/40**

(21) Application number: **21192526.8**

(22) Date of filing: **23.08.2021**

(51) International Patent Classification (IPC):
**C08L 23/12** *(2006.01)*

(52) Cooperative Patent Classification (CPC):
(C-Sets available)
**C08L 23/12;** C08L 2205/025; C08L 2205/03;
C08L 2205/035; C08L 2207/20; Y02W 30/62

(Cont.)

(54) **HIGH MELT FLOW POLYPROPYLENE COMPOSITION**

POLYPROPYLENZUSAMMENSETZUNG MIT HOHEM SCHMELZFLUSS

COMPOSITION DE POLYPROPYLÈNE À HAUT INDICE DE FLUIDITÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**01.03.2023 Bulletin 2023/09**

(73) Proprietor: **Borealis AG**
**1020 Vienna (AT)**

(72) Inventors:
• **KAHLEN, Susanne**
**4021 Linz (AT)**
• **BRAUN, Hermann**
**4021 Linz (AT)**
• **JERABEK, Michael**
**4021 Linz (AT)**
• **KRALICEK, Markus**
**4021 Linz (AT)**

(74) Representative: **Maiwald GmbH**
**Elisenhof**
**Elisenstraße 3**
**80335 München (DE)**

(56) References cited:
**EP-A1- 2 308 923        EP-A1- 3 095 820
WO-A1-2020/201084**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 23/12, C08L 23/06, C08L 23/12, C08L 23/12;
C08L 23/12, C08L 23/06, C08L 23/12, C08L 23/12,
C08K 7/14;
C08L 23/12, C08L 23/06, C08L 23/12, C08L 23/12,
C08L 23/12;
C08L 23/12, C08L 23/06, C08L 23/12, C08L 23/12,
C08L 23/12, C08K 7/14**

## Description

The present invention relates to high melt flow polypropylene compositions comprising mixed plastics polypropylene-based blends.

## Technical background

High melt flow polypropylenes are suitable for the production of fiber reinforced composites used e.g. in the automotive industry.

One of the fundamental problems in polymer business is recycling. At the moment, the market for recyclates, particularly recyclates from household trash, commonly denoted PCR ('post-consumer resins') is somewhat limited. Starting from household trash, the sorting and separation processes employed will not allow preparing pure polymers, i.e. there will always be some contaminants, or the processes may even result in blends of different polymers. When it comes to polyolefins, which constitute the vast majority of the polymer fraction of the collected household trash, a perfect separation of polypropylene and polyethylene is hardly possible. Recycled polyolefin materials, particularly post-consumer resins, are conventionally cross-contaminated with non-polyolefin materials such as polyethylene terephthalate, polyamide, polystyrene or non-polymeric substances like wood, paper, glass or aluminum. Even worse, those post-consumer recycled polyolefin materials are readily available on a multi-ton scale but unfortunately have limited mechanical properties and frequently severe odor and/or emission problems.

For fiber reinforced applications polypropylene compositions are required which have a high melt flow rate in order to prevent fiber breakage. At the same time balanced mechanical properties in high stiffness and strength are required. Recently, the demand of the market has expanded in direction of using recycled polyolefins in blends with virgin polymers in order to fulfil specific requirements.

However, there is a deeply felt need for allowing the dumping and reuse of post-consumer polyolefin recyclates in final products without health and safety hazards.

The present invention is based on the surprising finding that by carefully selecting the propylene homopolymer based virgin components in polypropylene based compositions, which contain mixed plastics polypropylene-based blends originating from post-consumer recycled polyolefin streams, polypropylene based compositions with a superior balance of properties in regard of impact properties and especially mechanical properties, such as in tensile properties, and flowability, shown in a high melt flow rate. Thus, the compositions of the invention comprising mixed plastics polypropylene-based blends originating from post-consumer recycled polyolefin streams qualify for moulding applications and fiber reinforced composites, especially in the automotive area, such as exterior automotive applications, and can replace sophisticated polypropylene compositions.

## Summary of the invention

The present invention relates to a composition obtainable by blending at least components (A), (B) and (C)

(A) 25 wt.-% to 75 wt.-%, preferably 35 to 65 wt.-%, more preferably 40 to 60 wt.-% of a mixed-plastics polypropylene blend, which originates from post-consumer waste and/or industrial waste;
(B) 17 wt.-% to 65 wt.-%, preferably 20 to 55 wt.-%, more preferably 25 to 50 wt.-% of a first propylene homopolymer; and
(C) 3 wt.-% to 30 wt.-%, preferably 5 to 27 wt.-%, more preferably 7 to 25 wt.-% of a second propylene homopolymer,

whereby all percentages refer to the total composition, and whereby
the mixed-plastics polypropylene blend (A) has

- a crystalline fraction (CF) content determined according to CRYSTEX QC analysis in the range from 82.5 to 96.0 wt.-%, preferably in the range from 84.0 to 95.5 wt.-%, and
- a soluble fraction (SF) content determined according to CRYSTEX QC analysis in the range from 4.0 to 17.5 wt.-%, preferably in the range from 4.5 to 16.0 wt.-%, whereby
- said crystalline fraction (CF) has an ethylene content (C2(CF)), as determined by FT-IR spectroscopy calibrated by quantitative $^{13}$C-NMR spectroscopy, in the range from 1.0 to 12.5 wt.-%, preferably in the range from 1.5 to 11.0 wt.-%; and
- said soluble fraction (SF) has an intrinsic viscosity (iV(SF)) in the range from 0.9 to below 2.5 dl/g, preferably in the range from 1.0 to 2.3 dl/g, more preferably in the range from 1.1 to 2.2 dl/g;

the first propylene homopolymer (B) has

- a melt flow rate MFR$_2$ (230°C, 2.16 kg, ISO 1133) of 500 to 1100 g/lOmin, preferably 650 to 1000 g/lOmin, more preferably 750 to 900 g/lOmin; and

the second propylene homopolymer (C) has

- a melt flow rate MFR$_2$ (230°C, 2.16 kg, ISO 1133) of 80 to 200 g/lOmin, preferably 100 to 175 g/lOmin, more preferably 120 to 150 g/lOmin; and
- a tensile modulus of 1500 to 2100 MPa, preferably 1550 to 2000 MPa, more preferably 1600 to 1900 MPa, and

the composition has

- a melt flow rate MFR$_2$ (230°C, 2.16 kg, ISO 1133) of 50 to 100 g/lOmin, preferably 55 to 95 g/lOmin, more preferably 60 to 90 g/10min.

Further, the present invention relates to an article, preferably a moulded article or fiber reinforced composite, more preferably an automotive article comprising the composition as described above or below.

Still further, the present invention relates to the use of the composition as described above or below for the production of articles, preferably automotive articles, more preferably exterior automotive articles.

**Definitions**

Unless defined otherwise, all technical and scientific terms used herein have the same meaning as commonly understood by one of ordinary skill in the art to which the invention pertains. Although, any methods and materials similar or equivalent to those described herein can be used in practice for testing of the present invention, the preferred materials and methods are described herein. In describing and claiming the present invention, the following terminology will be used in accordance with the definitions set out below. Unless clearly indicated otherwise, use of the terms "a", "an", and the like refers to one or more.

Mixed plastics is defined by the presence of low amounts of compounds usually not found in virgin polypropylene blends such as polystyrenes, polyamides, polyesters, wood, paper, limonene, aldehydes, ketones, fatty acids, metals, and/or long term decomposition products of stabilizers. Virgin polypropylene blends denote blends as directly originating from the production process without intermediate use.

As a matter of definition "mixed plastics" can be equated with detectable amounts of polystyrene and/or polyamide-6 and/or limonene and/or fatty acids.

Mixed plastics thereby can originate from both post-consumer waste and industrial waste, as opposed to virgin polymers. Post-consumer waste refers to objects having completed at least a first use cycle (or life cycle), i.e. having already served their first purpose. In contrast to that, industrial waste refers to manufacturing scrap, respectively conversion scrap, which does not normally reach a consumer.

It will be understood by those skilled in the art that a soluble fraction (SF) as obtained by CRYSTEX QC analysis having an intrinsic viscosity (iV(SF)) in the range from 0.9 to 2.5 dl/g is typically found in material from recycling streams. In a preferred aspect of the invention the soluble fraction (SF) as obtained by CRYSTEX QC analysis has an intrinsic viscosity (iV(SF)) in the range from 0.9 to 2.2 dl/g.

A polymer blend is a mixture of two or more polymeric components. In general, the blend can be prepared by mixing the two or more polymeric components. A suitable mixing procedure known in the art is post-polymerization blending. Post-polymerization blending can be dry blending of polymeric components such as polymer powders and/or compounded polymer pellets or melt blending by melt mixing the polymeric components.

A propylene homopolymer is a polymer, which essentially consists of propylene monomer units. Due to impurities especially during commercial polymerization processes a propylene homopolymer can comprise up to 0.1 mol% comonomer units, preferably up to 0.05 mol% comonomer units and most preferably up to 0.01 mol% comonomer units.

"Polypropylene-polyethylene blend" refers to a composition containing both polypropylene and polyethylene including also polypropylene copolymers as well as polyethylene copolymers. As a direct determination of the polypropylene content and polyethylene content is not possible, the weight ratio polypropylene (A-1) to polyethylene (A-2) of 19: 1 to 7:3 denotes the equivalent ratio as determined from calibration by iPP and HDPE and determination by IR spectroscopy.

A polypropylene means a polymer being composed of units derived from propylene in an amount of more than 50 mol-%.

A polyethylene means a polymer being composed of units derived from ethylene in an amount of more than 50 mol-%.

The term "XCS" refers to the xylene cold soluble fraction (XCS wt.-%) determined at 25 °C according to ISO 16152. The term "XCI" refers to the xylene cold insoluble fraction (XCI wt.-%) determined at 25 °C according to ISO 16152.

Reactor blend is a blend originating from the production in two or more reactors coupled in series or in a reactor having two or more reaction compartments. A reactor blend may alternatively result from blending in solution. A reactor blend stands in contrast to a compound as produced by melt extrusion.

If not indicated otherwise "%" refers to weight-% (wt.-%).

**Detailed description**

Composition

In a first aspect, the present invention relates to a composition obtainable by blending at least components (A), (B) and (C)

(A) 25 wt.-% to 75 wt.-%, preferably 35 to 65 wt.-%, more preferably 40 to 60 wt.-% of a mixed-plastics polypropylene blend, which originates from post-consumer waste and/or industrial waste;
(B) 17 wt.-% to 65 wt.-%, preferably 20 to 55 wt.-%, more preferably 25 to 50 wt.-% of a first propylene homopolymer; and
(C) 3 wt.-% to 30 wt.-%, preferably 5 to 27 wt.-%, more preferably 7 to 25 wt.-% of a second propylene homopolymer,

whereby all percentages refer to the total composition, and whereby
the mixed-plastics polypropylene blend (A) has

- a crystalline fraction (CF) content determined according to CRYSTEX QC analysis in the range from 82.5 to 96.0 wt.-%, preferably in the range from 84.0 to 95.5 wt.-%, and
- a soluble fraction (SF) content determined according to CRYSTEX QC analysis in the range from 4.0 to 17.5 wt.-%, preferably in the range from 4.5 to 16.0 wt.-%, whereby
- said crystalline fraction (CF) has an ethylene content (C2(CF)), as determined by FT-IR spectroscopy calibrated by quantitative $^{13}$C-NMR spectroscopy, in the range from 1.0 to 12.5 wt.-%, preferably in the range from 1.5 to 11.0 wt.-%; and
- said soluble fraction (SF) has an intrinsic viscosity (iV(SF)) in the range from 0.9 to below 2.5 dl/g, preferably in the range from 1.0 to 2.3 dl/g, more preferably in the range from 1.1 to 2.2 dl/g;

the first propylene homopolymer (B) has

- a melt flow rate $MFR_2$ (230°C, 2.16 kg, ISO 1133) of 500 to 1100 g/lOmin, preferably 650 to 1000 g/lOmin, more preferably 750 to 900 g/lOmin; and

the second propylene homopolymer (C) has

- a melt flow rate $MFR_2$ (230°C, 2.16 kg, ISO 1133) of 80 to 200 g/lOmin, preferably 100 to 175 g/lOmin, more preferably 120 to 150 g/lOmin; and
- a tensile modulus of 1500 to 2100 MPa, preferably 1550 to 2000 MPa, more preferably 1600 to 1900 MPa, and

the composition has

- a melt flow rate $MFR_2$ (230°C, 2.16 kg, ISO 1133) of 50 to 100 g/lOmin, preferably 55 to 95 g/lOmin, more preferably 60 to 90 g/10min.

The composition suitable for automotive application according to the present invention is particularly suitable for molding of articles, such as injection moulding of articles, or fiber reinforced composites to be used on the exterior of vehicles.

The composition according to the present invention has one or more of the following characteristics:
The composition has a melt flow rate $MFR_2$ (230°C, 2.16 kg, ISO 1133) of 50 to 100 g/10min, preferably 55 to 95 g/10min, more preferably 60 to 90 g/10min.

The composition can be characterized by CRYSTEX QC analysis. In the CRYSTEX QC analysis a crystalline fraction (CF) and a soluble fraction (SF) are obtained which can be quantified and analyzed in regard of the monomer and comonomer content as well as the intrinsic viscosity (iV).

The composition preferably shows one or all of the following properties in the CRYSTEX QC analysis:

- a crystalline fraction (CF) content determined according to CRYSTEX QC analysis in the range from 90.0 to 97.5 wt.-%, preferably 92.5 to 95.0 wt.-%, and
- a soluble fraction (SF) content determined according to CRYSTEX QC analysis in the range from 2.5 to 10.0 wt.-%, preferably 5.0 to 7.5 wt.-%.

Said crystalline fraction (CF) preferably has one or more, preferably all of the following properties:

- an ethylene content (C2(CF)), as determined by FT-IR spectroscopy calibrated by quantitative $^{13}$C-NMR spectroscopy, of 1.5 to 9.0 wt.-%, preferably of 3.0 to 4.5 wt.-%; and/or
- an intrinsic viscosity (iV(CF)), as measured in decalin according to DIN ISO 1628/1 at 135°C, of 1.00 to 2.00 dl/g, preferably of 1.10 to 1.50 dl/g.

Said soluble fraction (SF) preferably has one or more, preferably all of the following properties:

- an ethylene content (C2(SF)), as determined by FT-IR spectroscopy calibrated by quantitative $^{13}$C-NMR spectroscopy, in the range from 10.0 to 25.0 wt.-%, preferably from 12.5 to 21.0 wt.-%; and/or
- an intrinsic viscosity (iV(SF)), as measured in decalin according to DIN ISO 1628/1 at 135°C, of 0.50 to 1.50 dl/g, preferably of 0.80 to 1.20 dl/g.

The composition preferably comprises units derived from ethylene in an amount of from 1.0 to 10.0 wt.-%, more preferably from 2.0 to 7.5 wt.-%, still more preferably from 3.5 to 5.0 wt.-%.

Further, the composition preferably has an intrinsic viscosity (iV(Comp)) of 1.00 to 2.00 dl/g, more preferably of 1.10 to 1.75 dl/g, still more preferably of 1.20 to 1.50 dl/g.

The composition according to the invention preferably shows a superior balance of properties in regard of impact properties, flowability, as can be seen from the melt flow rate described above, and especially mechanical properties, such as in in regard of the tensile modulus or other tensile properties.

The composition preferably has a tensile modulus of from 1350 MPa to 1750 MPa, more preferably from 1400 MPa to 1600 MPa.

Further, the composition preferably has a tensile strain at tensile strength of from 3.5 to 8.0 %, more preferably from 4.0 to 7.5 %,

Still further, the composition preferably has a tensile strain at yield of from 4.5 to 8.0 %, more preferably from 5.0 to 7.5 %.

Further, the composition preferably has a tensile strength of from 20 to 40 MPa, more preferably from 25 to 35 MPa.

Still further, the composition preferably has a tensile stress at break of from 25 to 40 MPa, more preferably from 27 to 35 MPa,

Additionally, the composition preferably has a nominal tensile strain at break of from 5.0 to 12.5 %, more preferably from 5.5 to 10.0 %.

In regard of impact properties, the composition preferably has a Charpy Notched Impact Strength at 23 °C (CNIS at 23°C) of from 1.5 kJ/m$^2$ to 5.0 kJ/m$^2$, preferably from 2.0 kJ/m$^2$ to 4.0 kJ/m$^2$.

Further, the composition preferably has a Charpy Notched Impact Strength at -20 °C (CNIS at -20°C) of from 1.0 kJ/m$^2$ to 3.0 kJ/m$^2$, preferably from 1.2 kJ/m$^2$ to 2.5 kJ/m$^2$.

The composition of the invention mandatorily comprises components (A), (B) and (C) as described above or below in the accordingly described amounts.

The composition can optionally comprise additional polymeric components so that the composition may be obtainable by blending components (A), (B), (C) and one or more of the following component (D)

(D) 0 wt.-% to 20 wt.-%, preferably 0 to 15 wt.-%, more preferably 0 to 13 wt.-% of a third propylene homopolymer; whereby all percentages refer to the total composition, and whereby

the third propylene homopolymer (D) has

- a melt flow rate MFR$_2$ (230°C, 2.16 kg, ISO 1133) of 10 to 40 g/10min, preferably 12 to 30 g/10min, more preferably 15 to 25 g/10min; and
- a tensile modulus of 2000 to 2500 MPa, preferably 2100 to 2400 MPa, more preferably 2150 to 2300 MPa.

In one embodiment, the composition is obtainable by blending components (A), (B) and (C), with (D) not being present,

(A) 25 wt.-% to 75 wt.-%, preferably 35 to 65 wt.-%, more preferably 40 to 60 wt.-% of a mixed-plastics polypropylene blend;

(B) 17 wt.-% to 65 wt.-%, preferably 20 to 55 wt.-%, more preferably 25 to 50 wt.-% of a first propylene homopolymer; and

(C) 3 wt.-% to 30 wt.-%, preferably 5 to 27 wt.-%, more preferably 7 to 25 wt.-% of a second propylene homopolymer,

whereby all percentages refer to the total composition.

In another embodiment, the composition is obtainable by blending components (A), (B), (C) and (D),

(A) 25 wt.-% to 75 wt.-%, preferably 35 to 65 wt.-%, more preferably 40 to 60 wt.-% of a mixed-plastics polypropylene blend;

(B) 17 wt.-% to 55 wt.-%, preferably 20 to 45 wt.-%, more preferably 25 to 40 wt.-% of a first propylene homopolymer;

(C) 3 wt.-% to 30 wt.-%, preferably 5 to 27 wt.-%, more preferably 7 to 25 wt.-% of a second propylene homopolymer; and

(D) 1 wt.-% to 20 wt.-%, preferably 2 to 15 wt.-%, more preferably 3 to 13 wt.-% of a third propylene homopolymer,

whereby all percentages refer to the total composition.

Mixed-plastics polypropylene blend (A)

The mixed-plastics polypropylene blend (A) originates from post-consumer waste and/or industrial waste.

The mixed-plastics polypropylene blend (A) is suitably characterized by CRYSTEX QC analysis. In the CRYSTEX QC analysis, a crystalline fraction (CF) and a soluble fraction (SF) are obtained which can be quantified and analyzed in regard of the monomer and comonomer content as well as the intrinsic viscosity (iV).

The mixed-plastics polypropylene blend (A) shows the following properties in the CRYSTEX QC analysis:

- a crystalline fraction (CF) content determined according to CRYSTEX QC analysis in the range from 82.5 to 96.0 wt.-%, preferably in the range from 84.0 to 95.5 wt.-%, more preferably in the range from 85.0 to 95.0 wt.-%, and
- a soluble fraction (SF) content determined according to CRYSTEX QC analysis in the range from 4.0 to 17.5 wt.-%, preferably in the range from 4.5 to 16.0 wt.-%, more preferably in the range from 5.0 to 15.0 wt.-%.

Said crystalline fraction (CF) has one or more, preferably all of the following properties:

- an ethylene content (C2(CF)), as determined by FT-IR spectroscopy calibrated by quantitative $^{13}$C-NMR spectroscopy, in the range from 1.0 to 12.5 wt.-%, preferably in the range from 1.5 to 11.0 wt.-%, more preferably in the range from 2.0 to 10.0 wt.-%; and/or
- an intrinsic viscosity (iV(CF)), as measured in decalin according to DIN ISO 1628/1 at 135°C, preferably in the range from 1.0 to below 2.6 dl/g, more preferably in the range from 1.2 to 2.5 dl/g, still more preferably in the range from 1.3 to 2.4 dl/g.

Said soluble fraction (SF) has one or more, preferably all of the following properties:

- an ethylene content (C2(SF)), as determined by FT-IR spectroscopy calibrated by quantitative $^{13}$C-NMR spectroscopy, preferably in the range from 20.0 to 55.0 wt.-%, preferably in the range from 22.0 to 50.0 wt.-%, more preferably in the range from 24.0 to 48.0 wt.-%; and/or
- an intrinsic viscosity (iV(SF)), as measured in decalin according DIN ISO 1628/1 at 135°C, in the range from 0.9 to 2.5 dl/g, preferably in the range from 1.0 to 2.3 dl/g, more preferably in the range from 1.1 to 2.2 dl/g.

Preferably, the mixed-plastics polypropylene blend (A) comprises polypropylene and polyethylene.

The weight ratio of polypropylene to polyethylene is preferably from 19:1 to 7:3.

The mixed-plastics polypropylene blend (A) preferably comprises units derived from propylene in an amount of more than 50 mol-%.

The mixed-plastics polypropylene blend (A) preferably comprises units derived from ethylene in an amount of from 5.0 to 17.5 wt.-%, more preferably from 6.0 to 15.0 wt.-%, still more preferably from 7.5 to 13.0 wt.-%.

Further, the mixed-plastics polypropylene blend (A) preferably has one or more, preferably all of the following properties:

- a melt flow rate MFR$_2$ (230°C, 2.16 kg, ISO1133) of 6.0 to 40 g/10min, preferably of 8.0 to 35 g/10min, more preferably of 9.0 to 30 g/10min; and/or
- a polydisperstiy index PI of 2.0 to 5.0 Pa⁻1, preferably of 2.2 to 4.5 Pa$^{-1}$, more preferably of 2.5 to 4.0 Pa$^{-1}$; and/or
- a complex viscosity at 0.05 rad/s eta$_{0.05}$ of from 1000 kPa·s to 5000 kPa·s, preferably of from 1200 kPa·s to 4500 kPa·s, more preferably of from 1400 kPa·s to 4000 kPa·s; and/or
- a complex viscosity at 300 rad/s eta$_{300}$ of 100 kPa·s to 500 kPa·s, preferably of from 150 kPa·s to 400 kPa·s, more preferably of from 175 kPa·s to 300 kPa·s, and/or
- a density of 905 to 930 kg/m$^3$, preferably from 910 to 925 kg/m$^3$, more preferably from 913 to 922 kg/m$^3$; and/or
- a limonene content as determined by using solid phase microextraction (HS-SPME-GC-MS): 0.1 ppm to 50 ppm; and/or
- a tensile modulus of from 1000 MPa to 1500 MPa, preferably from 1100 MPa to 1400 MPa; and/or
- a Charpy Notched Impact Strength at 23°C (CNIS at 23°C) of from 3.0 to 7.5 kJ/m$^2$, preferably from 4.0 to 7.0 kJ/m$^2$.

The mixed-plastics polypropylene blend according to the present invention is preferably present in the form of pellets. Pelletization contributes to the low amounts of volatile substances.

First propylene homopolymer (B)

The first propylene homopolymer (B) has a very high melt flow rate MFR$_2$ (230°C, 2.16 kg, ISO 1133) of 500 to 1100 g/10min, preferably 650 to 1000 g/10min, more preferably 750 to 900 g/10min.

Preferably, the first propylene homopolymer (B) has a melting temperature of from 150 to 170°C, preferably from 155 to 166°C.

Further, the first propylene homopolymer (B) preferably has a narrow polydispersity index, measured as ratio of weight average molecular weight to number average molecular weight, Mw/Mn, of less than 7.0, such as from 2.0 to 6.5, more preferably from 3.5 to 5.5.

Still further, the first propylene homopolymer (B) has a tensile modulus of from 1000 to 1800 MPa, preferably 1200 to 1700 MPa, more preferably 1300 to 1600 MPa.

The presence of the first propylene homopolymer (B) ensures the high melt flow rate of the final composition.

Such propylene homopolymers are commercially available.

Second propylene homopolymer (C)

The second propylene homopolymer (C) has a lower melt flow rate (230°C, 2.16 kg, ISO 1133) than the first propylene homopolymer (B) of from 80 to 200 g/10min, preferably 100 to 175 g/10min, more preferably 120 to 150 g/10min.

The second propylene homopolymer (C) has a tensile modulus of from 1500 to 2100 MPa, preferably 1550 to 2000 MPa, more preferably 1600 to 1900 MPa.

Further, the second propylene homopolymer (C) preferably has one or more, preferably all of the following properties:

- a tensile strength of from 25 to 50 MPa, preferably from 30 to 40 MPa; and/or
- a nominal tensile strain at break of from 5.0 to 8.0 %, preferably from 6.0 to 7.0 %; and/or
- a tensile stress at break of from 30 to 50 MPa, preferably from 35 to 45 MPa; and/or
- a heat deflection temperature B (HDT B) of from 80 to 100°C, preferably from 83 to 95°C; and/or
- Charpy Notched Impact Strength at 23°C (CNIS, 23°C) of from 0.5 to 1.5 kJ/m$^2$, preferably from 0.7 to 1.2 kJ/m$^2$; and/or
- Charpy Notched Impact Strength at -20°C (CNIS, -20°C) of from 0.4 to 1.4 kJ/m$^2$, preferably from 0.6 to 1.1 kJ/m$^2$; and/or
- Charpy Notched Impact Strength at -30°C (CNIS, -30°C) of from 0.3 to 1.3 kJ/m$^2$, preferably from 0.5 to 1.0 kJ/m$^2$.

Thereby, the tensile properties are all measured according to ISO 527-2 at 50 mm/min, the HDT is measured according to ISO 75-2 at 0.45 MPa and the CNIS is measured according to ISO 179/1eA.

Such propylene homopolymers are commercially available.

Additives

Additives are commonly used in the composition according to the present invention. Preferably, the additives are selected from one or more of antioxidant(s), UV stabilizer(s), slip agent(s), nucleating agent(s), pigment(s), lubricant(s), masterbatch polymer(s) and/or antifogging agents.

Additives are usually present in the composition in an amount of from 0.01 to 4.0 wt.-%, preferably in an amount of 0.05 to 3.0 wt.-%, based on the total composition.

Third propylene homopolymer (D)

The optional third propylene homopolymer (D) preferably has the lowest melt flow rate $MFR_2$ (230°C, 2.16 kg, ISO 1133) of the three propylene homopolymers (B), (C) and (D) of 10 to 40 g/10min, preferably 12 to 30 g/10min, more preferably 15 to 25 g/10min.

The optional third propylene homopolymer (D) preferably has a higher tensile modulus than the the second propylene homopolymer (C). The tensile modulus of the optional third propylene homopolymer (D) is preferably from 2000 to 2500 MPa, preferably 2100 to 2400 MPa, more preferably 2150 to 2300 MPa, measured according to ISO 527-2 at 1 mm/min.

Further, the optional third propylene homopolymer (D) preferably has one or more, preferably all of the following properties:

- a tensile strength of from 25 to 50 MPa, preferably from 30 to 40 MPa; and/or
- a tensile strain at yield of from 4.0 to 8.0 %, preferably from 5.0 to 7.0 %; and/or
- a tensile stress at yield of from 30 to 50 MPa, preferably from 35 to 45 MPa; and/or
- a heat deflection temperature B (HDT B) of from 100 to 130°C, preferably from 110 to 120°C; and/or
- Charpy Notched Impact Strength at 23°C (CNIS, 23°C) of from 1.0 to 4.0 $kJ/m^2$, preferably from 1.5 to 3.5 $kJ/m^2$.

Thereby, the tensile properties are all measured according to ISO 527-2 at 50 mm/min, the HDT is measured according to ISO 75-2 at 0.45 MPa and the CNIS is measured according to ISO 179/1eA.

The optional third propylene homopolymer (D) preferably is nucleated, more preferably is nucleated by poly(vinylcyclohexane) as described e.g. in EP 2 960 279 B1.

Such propylene homopolymers are usually added for further improving the mechanical properties of the composition.

Such propylene homopolymers are commercially available.

Article

In another aspect, the present invention relates to an article, preferably a moulded article or fiber reinforced composite, more preferably an automotive article comprising the composition comprising the composition as described above or below.

The article is preferably used on the exterior of vehicles.

In one embodiment the composition of the article can comprise fiber, such as glass fibers. In the case fibers are present in the composition of the article, the amount of fibers is in the range of from 25 to 70 wt%, based on the composition of the article.

Use

In yet another aspect the present invention relates to the use of the composition as described above or below for the production of articles, preferably automotive articles, more preferably exterior automotive articles.

In one embodiment the composition used for the production of articles can comprise fibers, such as glass fibers. In the case fibers are present in the composition of the article, the amount of fibers is in the range of from 25 to 70 wt%, based on the composition of the article.

**Experimental Section**

The following Examples are included to demonstrate certain aspects and embodiments of the invention as described in the claims. It should be appreciated by those of skill in the art, however, that the following description is illustrative only and should not be taken in any way as a restriction of the invention.

**Test Methods**

**a) CRYSTEX**

**Determination of Crystalline and soluble fractions and their respective properties (IV and Ethylene content)**

The crystalline (CF) and soluble fractions (SF) of the polypropylene (PP) compositions as well as the comonomer content and intrinsic viscosities of the respective fractions were analyzed by use of the CRYSTEX instrument, Polymer Char (Valencia, Spain). Details of the technique and the method can be found in literature (Ljiljana Jeremic, Andreas Albrecht, Martina Sandholzer & Markus Gahleitner (2020) Rapid characterization of high-impact ethylene-propylene copolymer composition by crystallization extraction separation: comparability to standard separation methods, International Journal of Polymer Analysis and Characterization, 25:8, 581-596)

The crystalline and amorphous fractions are separated through temperature cycles of dissolution at 160°C, crystallization at 40°C and re-dissolution in 1,2,4-trichlorobenzene at 160°C. Quantification of SF and CF and determination of ethylene content (C2) are achieved by means of an integrated infrared detector (IR4) and for the determination of the intrinsic viscosity (iV) an online 2-capillary viscometer is used.

The IR4 detector is a multiple wavelength detector measuring IR absorbance at two different bands ($CH_3$ stretching vibration (centred at app. 2960 $cm^{-1}$) and the CH stretching vibration (2700-3000 $cm^{-1}$) that are serving for the determination of the concentration and the Ethylene content in Ethylene-Propylene copolymers. The IR4 detector is calibrated with series of 8 EP copolymers with known Ethylene content in the range of 2 wt.-% to 69 wt.-% (determined by $^{13}$C-NMR) and each at various concentrations, in the range of 2 and 13mg/ml. To encounter for both features, concentration and ethylene content at the same time for various polymer concentrations expected during Crystex analyses the following calibration equations were applied:

$$\text{Conc} = a + b \cdot Abs(CH) + c \cdot (Abs(CH))^2 + d \cdot Abs(CH_3) + e \cdot (Abs(CH_3)^2 + f \cdot Abs(CH) \cdot Abs(CH_3) \qquad \text{(Equation 1)}$$

$$CH_3/1000C = a + b \cdot Abs(CH) + c \cdot Abs(CH_3) + d \cdot (Abs(CH_3)/Abs(CH)) + e \cdot (Abs(CH_3)/Abs(CH))^2 \qquad \text{(Equation 2)}$$

The constants a to e for equation 1 and a to f for equation 2 were determined by using least square regression analysis.

The $CH_3/1000C$ is converted to the ethylene content in wt.-% using following relationship:

$$\text{wt.-\% (Ethylene in EP Copolymers)} = 100 - CH_3/1000TC \cdot 0.3 \qquad \text{(Equation 3)}$$

Amounts of Soluble Fraction (SF) and Crystalline Fraction (CF) are correlated through the XS calibration to the "Xylene Cold Soluble" (XCS) quantity and respectively Xylene Cold Insoluble (XCI) fractions, determined according to standard gravimetric method as per ISO16152. XS calibration is achieved by testing various EP copolymers with XS content in the range 2-31 wt.-%. The determined XS calibration is linear:

$$\text{wt.-\% XS} = 1{,}01 \cdot \text{wt\% SF} \qquad \text{(Equation 4)}$$

Intrinsic viscosity (iV) of the parent EP copolymer and its soluble and crystalline fractions are determined with a use of an online 2-capillary viscometer and are correlated to corresponding iV's determined by standard method in decalin according to ISO 1628-3. Calibration is achieved with various EP PP copolymers with iV = 2-4 dL/g. The determined calibration curve is linear:

$$iV \,(dL/g) = a \cdot Vsp/c \qquad \text{(Equation 5)}$$

The samples to be analyzed are weighed out in concentrations of 10mg/ml to 20mg/ml. To avoid injecting possible gels and/or polymers which do not dissolve in TCB at 160°C, like PET and PA, the weighed out sample was packed into a stainless steel mesh MW 0,077/D 0,05mm.

After automated filling of the vial with 1,2,4-TCB containing 250 mg/l 2,6-tert-butyl-4-methylphenol (BHT) as antioxidant, the sample is dissolved at 160°C until complete dissolution is achieved, usually for 60 min, with constant stirring of 400rpm. To avoid sample degradation, the polymer solution is blanketed with the N2 atmosphere during dissolution.

A defined volume of the sample solution is injected into the column filled with inert support where the crystallization of the sample and separation of the soluble fraction from the crystalline part is taking place. This process is repeated two times. During the first injection the whole sample is measured at high temperature, determining the iV [dl/g] and the C2 [wt.-%] of the PP composition. During the second injection the soluble fraction (at low temperature) and the crystalline fraction (at high temperature) with the crystallization cycle are measured (wt.-% SF, wt.-% C2, iV).

**b) Xylene cold soluble fraction (XCS, wt%)**

Xylene cold soluble fraction (XCS) was determined at 25 °C according ISO 16152; first edition; 2005-07-01. The part which remains insoluble is the xylene cold insoluble (XCI) fraction.

**c) Intrinsic viscosity**

Intrinsic viscosity was measured according to DIN ISO 1628/1, October 1999 (in Decalin at 135 °C).

**d) Charpy Notched Impact Strength**

was determined according to ISO 179-1 eA at +23 °C and at -20 °C on injection molded specimens of 80 x 10 x 4 mm$^3$ prepared according to EN ISO 1873-2. The measurement was done after 96 h conditioning time at 23 °C of the specimen.

**e) Tensile properties**

The tensile properties (tensile modulus, tensile strain at break, tensile strength, tensile strain at tensile strength, tensile strain at yield, tensile stress at break) were measured according to ISO 527-2 (cross head speed = 1 mm/min; test speed 50 mm/min at 23 °C) using injection molded specimens 1B prepared as described in EN ISO 1873-2 (dog bone shape, 4 mm thickness). The measurement was done after 96 h conditioning time at 23 °C of the specimen.

**f) Comonomer content**

**Poly(propylene-co-ethylene) - ethylene content - IR spectroscopy**

Quantitative infrared (IR) spectroscopy was used to quantify the ethylene content of the poly(ethylene-co-propene) copolymers through calibration to a primary method. Calibration was facilitated through the use of a set of in-house non-commercial calibration standards of known ethylene contents determined by quantitative $^{13}$C solution-state nuclear magnetic resonance (NMR) spectroscopy. The calibration procedure was undertaken in the conventional manner well documented in the literature. The calibration set consisted of 38 calibration standards with ethylene contents ranging 0.2-75.0 wt.% produced at either pilot or full scale under a variety of conditions. The calibration set was selected to reflect the typical variety of copolymers encountered by the final quantitative IR spectroscopy method. Quantitative IR spectra were recorded in the solid-state using a Bruker Vertex 70 FTIR spectrometer. Spectra were recorded on 25x25 mm square films of 300 μm thickness prepared by compression moulding at 180 - 210°C and 4-6 MPa. For samples with very high ethylene contents (>50 mol%) 100 μm thick films were used. Standard transmission FTIR spectroscopy was employed using a spectral range of 5000-500 cm$^{-1}$, an aperture of 6 mm, a spectral resolution of 2 cm$^{-1}$, 16 background scans, 16 spectrum scans, an interferogram zero filling factor of 64 and Blackmann-Harris 3-term apodisation. Quantitative analysis was undertaken using the total area of the $CH_2$ rocking deformations at 730 and 720 cm$^{-1}$ ($A_Q$) corresponding to $(CH_2)_{>2}$ structural units (integration method G, limits 762 and 694 cm$^{-1}$). The quantitative band was normalised to the area of the CH band at 4323 cm$^{-1}$ ($A_R$) corresponding to CH structural units (integration method G, limits 4650, 4007 cm$^{-1}$). The ethylene content in units of weight percent was then predicted from the normalised absorption ($A_Q$ / $A_R$) using a quadratic calibration curve. The calibration curve having previously been constructed by ordinary least squares (OLS) regression of the normalised absorptions and primary comonomer contents measured on the calibration set.

**Poly(propylene-co-ethylene) - ethylene content - $^{13}$C NMR spectroscopy**

Quantitative $^{13}$C{$^1$H} NMR spectra were recorded in the solution-state using a Bruker Avance III 400 NMR spectrometer operating at 400.15 and 100.62 MHz for $^1$H and $^{13}$C respectively. All spectra were recorded using a $^{13}$C optimised 10 mm extended temperature probehead at 125°C using nitrogen gas for all pneumatics. Approximately 200 mg of material was dissolved in 3 ml of 1,2-tetrachloroethane-d$_2$ (TCE-d$_2$) along with chromium (III) acetylacetonate (Cr(acac)$_3$) resulting in a 65 mM solution of relaxation agent in solvent (Singh, G., Kothari, A., Gupta, V., Polymer Testing 28 5 (2009), 475).
To ensure a homogenous solution, after initial sample preparation in a heat block, the NMR tube was further heated in a rotatory oven for at least 1 hour. Upon insertion into the magnet the tube was spun at 10 Hz. This setup was chosen primarily for the high resolution and quantitatively needed for accurate ethylene content quantification. Standard single-pulse excitation was employed without NOE, using an optimised tip angle, 1 s recycle delay and a bi-level WALTZ16 decoupling scheme (Zhou, Z., et al. J. Mag. Reson. 187 (2007) 225, and in Busico, V., et al, Macromol. Rapid Commun. 2007, 28, 1128). A total of 6144 (6k) transients were acquired per spectra. Quantitative $^{13}C\{^{1}H\}$ NMR spectra were processed, integrated and relevant quantitative properties determined from the integrals. All chemical shifts were indirectly referenced to the central methylene group of the ethylene block (EEE) at 30.00 ppm using the chemical shift of the solvent. This approach allowed comparable referencing even when this structural unit was not present. Characteristic signals corresponding to the incorporation of ethylene were observed (Cheng, H. N., Macromolecules 17 (1984), 1950) and the comonomer fraction calculated as the fraction of ethylene in the polymer with respect to all monomer in the polymer: fE = ( E / ( P + E ) The comonomer fraction was quantified using the method of Wang et. al. (Wang, W-J., Zhu, S., Macromolecules 33 (2000), 1157) through integration of multiple signals across the whole spectral region in the $^{13}C\{^{1}H\}$ spectra. This method was chosen for its robust nature and ability to account for the presence of regio-defects when needed. Integral regions were slightly adjusted to increase applicability across the whole range of encountered comonomer contents. For systems with very low ethylene content where only isolated ethylene in PPEPP sequences were observed the method of Wang et. al. was modified reducing the influence of integration of sites that are no longer present. This approach reduced the overestimation of ethylene content for such systems and was achieved by reduction of the number of sites used to determine the absolute ethylene content to E = 0.5( $S\beta\beta$ + $S\beta\gamma$ + $S\beta\delta$ + 0.5( $S\alpha\beta$ + $S\alpha\gamma$)) Through the use of this set of sites the corresponding integral equation becomes E = 0.5( $I_H$ +$I_G$ + 0.5( $I_C$ + $I_D$ )) using the same notation used in the article of Wang et. al. (Wang, W-J., Zhu, S., Macromolecules 33 (2000), 1157). Equations used for absolute propylene content were not modified. The mole percent comonomer incorporation was calculated from the mole fraction: E [mol%] = 100 * fE. The weight percent comonomer incorporation was calculated from the mole fraction: E [wt.%] = 100 * ( fE * 28.06 ) / ( (fE * 28.06) + ((1-fE) * 42.08) ).

**Comonomer content**

Contents were determined using a film thickness method using the intensity of the quantitative band I(q) and the thickness of the pressed film T using the following relationship:
[ I(q) / T ]m + c = C where m and c are the coefficients determined from the calibration curve constructed using the comonomer contents obtained from $^{13}$C-NMR spectroscopy.

Comonomer content was measured in a known manner based on Fourier transform infrared spectroscopy (FTIR) calibrated with $^{13}$C-NMR, using Nicolet Magna 550 IR spectrometer together with Nicolet Omnic FTIR software. Films having a thickness of about 250 $\mu$m were compression molded from the samples. Similar films were made from calibration samples having a known content of the comonomer. The comonomer content was determined from the spectrum from the wave number range of from 1430 to 1100 cm$^{-1}$. The absorbance was measured as the height of the peak by selecting the so-called short or long base line or both. The short base line was drawn in about 1410 - 1320 cm$^{-1}$ through the minimum points and the long base line about between 1410 and 1220 cm$^{-1}$. Calibrations needed to be done specifically for each base line type. Also, the comonomer content of the unknown sample was within the range of the comonomer contents of the calibration samples.

**g) MFR**

Melt flow rates were measured with a load of 2.16 kg (MFR$_2$) at 230 °C (polypropylene based materials) or at 190 °C (polyethylene based materials). The melt flow rate is that quantity of polymer in grams which the test apparatus standardized to ISO 1133 extrudes within 10 minutes at a temperature of 230 °C (or 190°C) under a load of 2.16 kg.

**h) Density**

Density was measured according to ISO 1183-187. Sample preparation was done by compression molding in accordance with ISO 1872-2:2007.

**i) Rheological parameters**

The characterization of polymer melts by dynamic shear measurements complies with ISO standards 6721-1 and 6721-10. The measurements were performed on an Anton Paar MCR501 stress controlled rotational rheometer, equipped with a 25 mm parallel plate geometry. Measurements were undertaken on compression moulded plates using nitrogen atmosphere and setting a strain within the linear viscoelastic regime. The oscillatory shear tests were done at 190°C applying a frequency range between 0.01 and 600 rad/s and setting a gap of 1.3 mm.

In a dynamic shear experiment the probe is subjected to a homogeneous deformation at a sinusoidal varying shear strain or shear stress (strain and stress controlled mode, respectively). On a controlled strain experiment, the probe is subjected to a sinusoidal strain that can be expressed by

$$\gamma(t) = \gamma_0 \sin(\omega t) \qquad (1)$$

If the applied strain is within the linear viscoelastic regime, the resulting sinusoidal stress response can be given by

$$\sigma(t) = \sigma_0 \sin(\omega t + \delta) \qquad (2)$$

where $\sigma_0$, and $\gamma_0$ are the stress and strain amplitudes, respectively; $\omega$ is the angular frequency; $\delta$ is the phase shift (loss angle between applied strain and stress response); t is the time. Dynamic test results are typically expressed by means of several different rheological functions, namely the shear storage modulus, G', the shear loss modulus, G", the complex shear modulus, G*, the complex shear viscosity, $\eta$*, the dynamic shear viscosity, $\eta$', the out-of-phase component of the complex shear viscosity, $\eta$" and the loss tangent, tan $\eta$, which can be expressed as follows:

$$G' = \frac{\sigma_0}{\gamma_0} \cos\delta \ [Pa] \qquad (3)$$

$$G'' = \frac{\sigma_0}{\gamma_0} \sin\delta \ [Pa] \qquad (4)$$

$$G* = G' + iG'' \ [Pa] \qquad (5)$$

$$\eta* = \eta' - i\eta'' \ [Pa \cdot s] \qquad (6)$$

$$\eta' = \frac{G''}{\omega} \ [Pa \cdot s] \qquad (7)$$

$$\eta'' = \frac{G'}{\omega} \ [Pa \cdot s] \qquad (8)$$

The determination of so-called Shear Thinning Index, which correlates with MWD and is independent of Mw, is done as described in equation 9.

$$SHI_{(x/y)} = \frac{Eta* \ for \ (G* = x \ kPa)}{Eta* \ for \ (G* = y \ kPa)} \qquad (9)$$

For example, the $SHI_{(2.7/210)}$ is defined by the value of the complex viscosity, in Pa s, determined for a value of G* equal to 2.7 kPa, divided by the value of the complex viscosity, in Pa s, determined for a value of G* equal to 210 kPa.

The values of storage modulus (G'), loss modulus (G"), complex modulus (G*) and complex viscosity ($\eta$*) were obtained as a function of frequency ($\omega$).

Thereby, e.g. $\eta*_{300rad/s}$ (eta*$_{300rad/s}$) is used as abbreviation for the complex viscosity at the frequency of 300 rad/s and $\eta*_{0.05rad/s}$ (eta*$_{0.05rad/s}$) is used as abbreviation for the complex viscosity at the frequency of 0.05 rad/s.

The loss tangent tan (delta) is defined as the ratio of the loss modulus (G") and the storage modulus (G') at a given frequency. Thereby, e.g. $tan_{0.05}$ is used as abbreviation for the ratio of the loss modulus (G") and the storage modulus (G') at 0.05 rad/s and $tan_{300}$ is used as abbreviation for the ratio of the loss modulus (G") and the storage modulus (G') at 300 rad/s. The elasticity balance $tan_{0.05}/tan_{300}$ is defined as the ratio of the loss tangent $tan_{0.05}$ and the loss tangent $tan_{300}$.

Besides the above mentioned rheological functions one can also determine other rheological parameters such as the so-called elasticity index *EI(x)*. The elasticity index *Ei(x)* is the value of the storage modulus, G' determined for a value of the loss modulus, G" of *x* kPa and can be described by equation 10.

$$EI(x) = G' \ for \ (G'' = x \ kPa) \ [\text{Pa}] \qquad (10)$$

For example, the EI(5kPa) is the defined by the value of the storage modulus G', determined for a value of G" equal to 5 kPa.

The polydispersity index, *PI,* is defined by equation 11.

$$PI = \frac{10^5}{G'(\omega_{COP})}, \qquad \omega_{COP} = \omega \ for \ (G' = G'') \qquad (11)$$

where $\omega_{COP}$ is the cross-over angular frequency, determined as the angular frequency for which the storage modulus, G', equals the loss modulus, G".

The values are determined by means of a single point interpolation procedure, as defined by Rheoplus software. In situations for which a given G* value is not experimentally reached, the value is determined by means of an extrapolation, using the same procedure as before. In both cases (interpolation or extrapolation), the option from Rheoplus "*Interpolate y-values to x-valuesfrom parameter*" and the "*logarithmic interpolation type*" were applied.

References:

[1] "Rheological characterization of polyethylene fractions", Heino, E.L., Lehtinen, A., Tanner J., Seppälä, J., Neste Oy, Porvoo, Finland, Theor. Appl. Rheol., Proc. Int. Congr. Rheol, 11th (1992), 1, 360-362.
[2] "The influence of molecular structure on some rheological properties of polyethylene", Heino, E.L., Borealis Polymers Oy, Porvoo, Finland, Annual Transactions of the Nordic Rheology Society, 1995.
[3] "Definition of terms relating to the non-ultimate mechanical properties of polymers", Pure & Appl. Chem., Vol. 70, No. 3, pp. 701-754, 1998.

**j) Heat DeflectionTemperature (HDT)**

The HDT was determined on injection molded test specimens of 80 $\times$ 10 $\times$ 4 mm$^3$ prepared according to ISO 1873-2 and stored at +23°C for at least 96 hours prior to measurement. The test was performed on flatwise supported specimens according to ISO 75, condition B, with a nominal surface stress of 0.45 MPa.

**Experiments**

Table 1 shows the properties of the polypropylene / polyethylene blends (A-1) and (A-2) suitable as mixed-plastics polypropylene blend (A). As these compositions come from a mechanical recycling process, the properties are indicated as ranges.

Table 2 shows the properties of the samples of blends (A-1) and (A-2), which were used for the evaluation.

As blend A-1 the mixed-plastics polypropylene blend Dipolen PP is used, commercially available from mtm Plastics GmbH. Dipolen PP is a post-consumer recyclate polypropylene based material having a density (determined according to DIN EN ISO 1183) of 920 kg/m$^3$, a melt flow rate (determined according to DIN EN ISO 1133, 230 °C/2.16 kg) of 14.1 g/10 min, a moisture content (determined via a moisture infrared analyzer, 105 °C) of less than 0.1 %, a tensile modulus (determined according to DIN EN ISO 527, 1 mm/min) of more than 1100 MPa, a yield stress (determined according to DIN EN ISO 527, 50 mm/min) of more than 25 MPa, and a tensile strain (determined according to DIN EN ISO 527, 50 mm/min) of more than 180 %.

As blend A-2 the mixed-plastics polypropylene blend Purpolen PP is used, commercially available from mtm Plastics GmbH. Purpolen PP is a post-consumer recyclate polypropylene based material having a density (determined according to DIN EN ISO 1183) of 916 kg/m$^3$, a melt flow rate (determined according to DIN EN ISO 1133, 230 °C/2.16 kg) of 36 g/10 min, a moisture content (determined via a moisture infrared analyzer, 105 °C) of less than 0.1 %, a tensile modulus (determined according to DIN EN ISO 527, 1 mm/min) of more than 1100 MPa, a yield stress (determined according to DIN EN ISO 527, 50 mm/min) of more than 24 MPa, and a tensile strain (determined according to DIN EN ISO 527, 50 mm/min) of more than 18 %.

**Table 1: Properties of Polypropylene / Polyethylene Blends Mixtures (Blend A-1, A-2)**

| | Blend A-1 | Blend A-2 |
|---|---|---|
| PP / PE ratio | 11 : 1 | 11 : 1 |
| C2 (Blend A, total) wt.-% | 8.3 - 10.0 | 10-12 |
| Limonene | > 0.1 ppm | > 0.1 ppm |
| $MFR_2$ (230°C, ISO1133), g/10min | 12.0 - 15.0 | 10.0 - 15.0 |
| iV (CF), dl/g | 1.8 | 1.6 |
| C2 (CF), wt.-% | 5.7 - 9.0 | 7 |
| SF (CRYSTEX), wt.-% | 8.0 - 10.3 | 13.7 |
| iV (SF), dl/g | 1.2 - 1.7 | 2.1 |
| C2 (SF), wt.-% | 27.0 - 32.0 | 32.2 |
| Tensile modulus, ISO 527-2, MPa | 1200-1280 | 1303 |
| Charpy NIS + 23 °C,ISO 179 1eA, $kJ/m^2$ | 4.8 - 5.8 | 5.6 |

**Table 2: Properties of the Polypropylene / Polyethylene Blends Mixtures (Blend A-1, A-2) used in evaluation**

| | Blend A-1 | Blend A-2 |
|---|---|---|
| Total C2 content (wt.-%) | 9.7 | 10.6 |
| Limonene content (ppm) | 16 | n.m. |
| $MFR_2$ (g/10 min), 230 °C | 14.1 | 15 |
| Density ($kg/m^3$) | 920 | 916 |
| PI ($Pa^{-1}$) | 3.19 | 2.98 |
| $eta_{0.05}$ (Pa·s) | 3215 | 1527 |
| $eta_{300}$ (Pa·s) | 261 | 208 |
| Soluble fraction (wt.-%) | 8.7 | 13.7 |
| C2 content in soluble fraction (wt.-%) | 30.1 | 32.2 |
| C2 content in crystalline fraction (wt.-%) | 8.4 | 7.0 |
| Intrinsic viscosity soluble fraction (dl/g) | 1.3 | 2.1 |
| Intrinsic viscosity crystalline fraction (dl/g) | 1.8 | 1.6 |

PP-Homo 1 was propylene homopolymer HL708FB with an $MFR_2$ (2.16 kg, 230°C, ISO1133) of 800 g/10min and a Tm (DSC, ISO 11357-3) of 158°C, commercially available from Borealis AG, Austria and represents the first propylene homopolymer (B).

PP-Homo 2 was propylene homopolymer HK060AE with an $MFR_2$ (2.16 kg, 230°C, ISO1133) of 125 g/10min and a Tm (DSC, ISO 11357-3) of 158°C, commercially available from Borealis AG, Austria and represents the second propylene homopolymer (C). Further properties are disclosed in Table 2 below in example CE1.

PP-Homo 3 was propylene homopolymer HF955MO with an $MFR_2$ (2.16 kg, 230°C, ISO1133) of 20 g/10min and a tensile modulus of 2200 MPa (ISO 527-2, 1 mm/min), commercially available from Borealis AG, Austria and represents the third propylene homopolymer (D).

Additives is an antioxidant one-pack of Pentaerythrityl-tetrakis(3-(3',5'-di-tert. butyl-4-hydroxyphenyl)-propionate and Tris (2,4-di-t-butylphenyl) phosphite in a weight ratio of 1:2.

The HC001A having a density of 905 $kg/m^3$, an $MFR_2$ (determined according to ISO 1133, 2.16 kg, 230 °C) of 2.7 g/10 min, and a crystallization temperature Tc of 112 °C was used as a homo-PP based carrier of the additives.

Table 3 shows the compositions of the examples.

**Table 3: Compositions of the examples**

|  | CE1 | IE1 | IE2 | IE3 | IE4 | IE5 | IE6 |
|---|---|---|---|---|---|---|---|
| Blend A-1 [wt.-%] | - | 48.8 | 48.8 | 48.8 | 48.8 | 48.8 | - |
| Blend A-2 [wt.-%] | - | - | - | - | - | - | 48.8 |
| PP Homo 1 [wt.-%] | - | 34.7 | 39.7 | 37.7 | 29.7 | 29.7 | 29.7 |
| PP Homo 2 [wt.-%] | 100 | 10.0 | 10.0 | 12.0 | 20.0 | 10.0 | 10.0 |
| PP Homo 3 [wt.-%] | - | 5.0 | - | - | - | 10.0 | 10.0 |
| Additives [wt.-%] | - | 0.3 | 0.3 | 0.3 | 0.3 | 0.3 | 0.3 |
| Homo-PP carrier [wt.-%] | - | 1.2 | 1.2 | 1.2 | 1.2 | 1.2 | 1.2 |

Table 4 shows the properties of the examples.

**Table 4: Properties of the examples**

|  | CE1 | IE1 | IE2 | IE3 | IE4 | IE5 | IE6 |
|---|---|---|---|---|---|---|---|
| $MFR_2$, g/10 min | 125.0 | 71.0 | 87.5 | 82.9 | 68.3 | 70.0 | 76.0 |
| C2 (Comp), wt% | 0 | 4.47 | 4.15 | 4.21 | 4.50 | n.m. | n.m. |
| iV (Comp), dl/g | 1.20 | 1.28 | 1.23 | 1.25 | 1.28 | n.m. | n.m. |
| CF (CRYSTEX), wt% | 100 | 93.65 | 93.50 | 93.58 | 93.58 | n.m. | n.m. |
| C2 (CF), wt% | 0 | 3.77 | 3.36 | 3.61 | 3.38 | n.m. | n.m. |
| iV (CF), dl/g | 1.20 | 1.28 | 1.23 | 1.25 | 1.28 | n.m. | n.m. |
| SF (CRYSTEX), wt% | 0 | 6.35 | 6.50 | 6.42 | 6.42 | n.m. | n.m. |
| C2 (SF), wt% | 0 | 17.88 | 15.40 | 13.60 | 13.96 | n.m. | n.m. |
| iV (SF), dl/g | - | 0.93 | 0.94 | 0.96 | 0.99 | n.m. | n.m. |
| Tensile modulus, MPa | 1860 | 1487 | 1469 | 1472 | 1478 | 1515 | 1527 |
| Tensile strength, MPa | n.m. | 30.7 | 30.2 | 30.3 | 30.5 | 31.5 | 28.0 |
| Tensile strain at tensile strength, % | 6.2 | 6.9 | 6.5 | 6.7 | 6.8 | 6.6 | 4.5 |
| Nominal tensile strain at break, % | n.m. | 8.6 | 6.9 | 7.8 | 8.4 | 8.2 | 5.8 |
| Tensile strain at yield, % | n.m. | 6.9 | 10.1 | 6.7 | 6.8 | 6.6 | 5.3 |
| Tensile stress at break, MPa | 38.1 | 29.2 | 29.9 | 29.4 | 29.3 | 29.9 | 29.9 |
| Tensile stress at yield, MPa | n.m. | 30.7 | 30.2 | 30.3 | 30.5 | 31.3 | 29.7 |
| Charpy NIS, +23°C, $kJ/m^2$ | 1.0 | n.m. | n.m. | n.m. | n.m. | n.m. | 3.2 |
| Charpy NIS, -20°C, $kJ/m^2$ | 0.9 | n.m. | n.m. | n.m. | n.m. | n.m. | 1.8 |
| n.m. = not measured | | | | | | | |

The inventive examples show composition with around 50 wt% of blends from household waste with a high melt flow rate of around 70 g/10 min and good mechanical properties. The inventive compostions show a higher impact strength than the comparative example CE1.

The addition of PP Homo 3 in examples IE1, IE5 and IE6 further improve the tensile properties without impairing the high melt flow rates.

The compositions according to the inventions thus show a properties profile, which is especially suitable for glass fiber applications.

**EP 4 141 067 B1**

**Claims**

1. A composition obtainable by blending at least components (A), (B) and (C)

   (A) 25 wt.-% to 75 wt.-%, preferably 35 to 65 wt.-%, more preferably 40 to 60 wt.-% of a mixed-plastics polypropylene blend, which originates from post-consumer waste and/or industrial waste;
   (B) 17 wt.-% to 65 wt.-%, preferably 20 to 55 wt.-%, more preferably 25 to 50 wt.-% of a first propylene homopolymer; and
   (C) 3 wt.-% to 30 wt.-%, preferably 5 to 27 wt.-%, more preferably 7 to 25 wt.-% of a second propylene homopolymer,
   whereby all percentages refer to the total composition, and whereby
   the mixed-plastics polypropylene blend (A) has

   - a crystalline fraction (CF) content determined according to CRYSTEX QC analysis in the range from 82.5 to 96.0 wt.-%, preferably in the range from 84.0 to 95.5 wt.-%, and
   - a soluble fraction (SF) content determined according to CRYSTEX QC analysis in the range from 4.0 to 17.5 wt.-%, preferably in the range from 4.5 to 16.0 wt.-%, whereby
   - said crystalline fraction (CF) has an ethylene content (C2(CF)), as determined by FT-IR spectroscopy calibrated by quantitative $^{13}$C-NMR spectroscopy, in the range from 1.0 to 12.5 wt.-%, preferably in the range from 1.5 to 11.0 wt.-%; and
   - said soluble fraction (SF) has an intrinsic viscosity (iV(SF)) in the range from 0.9 to below 2.5 dl/g, preferably in the range from 1.0 to 2.3 dl/g, more preferably in the range from 1.1 to 2.2 dl/g;

   the first propylene homopolymer (B) has

   - a melt flow rate MFR$_2$ (230°C, 2.16 kg, ISO 1133) of 500 to 1100 g/10min, preferably 650 to 1000 g/10min, more preferably 750 to 900 g/10min; and

   the second propylene homopolymer (C) has

   - a melt flow rate MFR$_2$ (230°C, 2.16 kg, ISO 1133) of 80 to 200 g/10min, preferably 100 to 175 g/10min, more preferably 120 to 150 g/10min; and
   - a tensile modulus of 1500 to 2100 MPa, preferably 1550 to 2000 MPa, more preferably 1600 to 1900 MPa, and

   the composition has

   - a melt flow rate MFR$_2$ (230°C, 2.16 kg, ISO 1133) of 50 to 100 g/10min, preferably 55 to 95 g/10min, more preferably 60 to 90 g/10min.

2. The composition according to claim 1, obtainable by blending components (A), (B), (C) and the following component (D)

   (D) 0 wt.-% to 20 wt.-%, preferably 0 to 15 wt.-%, more preferably 0 to 13 wt.-% of a third propylene homopolymer; whereby all percentages refer to the total composition, and whereby
   the third propylene homopolymer (D) has

   - a melt flow rate MFR$_2$ (230°C, 2.16 kg, ISO 1133) of 10 to 40 g/10min, preferably 12 to 30 g/10min, more preferably 15 to 25 g/10min; and
   - a tensile modulus of 2000 to 2500 MPa, preferably 2100 to 2400 MPa, more preferably 2150 to 2300 MPa.

3. The composition according to claims 1 or 2, obtainable by blending components (A), (B) and (C), with (D) not being present,

   (A) 25 wt.-% to 75 wt.-%, preferably 35 to 65 wt.-%, more preferably 40 to 60 wt.-% of a mixed-plastics polypropylene blend;
   (B) 17 wt.-% to 65 wt.-%, preferably 20 to 55 wt.-%, more preferably 25 to 50 wt.-% of a first propylene homopolymer; and

(C) 3 wt.-% to 30 wt.-%, preferably 5 to 27 wt.-%, more preferably 7 to 25 wt.-% of a second propylene homopolymer,

whereby all percentages refer to the total composition.

4. The composition according to claims 1 or 2, obtainable by blending components (A), (B), (C) and (D),

(A) 25 wt.-% to 75 wt.-%, preferably 35 to 65 wt.-%, more preferably 40 to 60 wt.-% of a mixed-plastics polypropylene blend;
(B) 17 wt.-% to 55 wt.-%, preferably 20 to 45 wt.-%, more preferably 25 to 40 wt.-% of a first propylene homopolymer;
(C) 3 wt.-% to 30 wt.-%, preferably 5 to 27 wt.-%, more preferably 7 to 25 wt.-% of a second propylene homopolymer; and
(D) 1 wt.-% to 20 wt.-%, preferably 2 to 15 wt.-%, more preferably 3 to 13 wt.-% of a third propylene homopolymer,

whereby all percentages refer to the total composition.

5. The composition according to any one of the preceding claims having

- a crystalline fraction (CF) content determined according to CRYSTEX QC analysis in the range from 90.0 to 97.5 wt.-%, preferably 92.5 to 95.0 wt.-%, and
- a soluble fraction (SF) content determined according to CRYSTEX QC analysis in the range from 2.5 to 10.0 wt.-%, preferably 5.0 to 7.5 wt.-%, whereby
- said crystalline fraction (CF) has an ethylene content (C2(CF)), as determined by FT-IR spectroscopy calibrated by quantitative $^{13}$C-NMR spectroscopy, of 1.5 to 9.0 wt.-%, preferably 3.0 to 4.5 wt.-%;
- said crystalline fraction (CF) has an intrinsic viscosity (iV(CF)) of 1.00 to 2.00 dl/g, preferably from 1.10 to 1.50 dl/g;
- said soluble fraction (SF) has an ethylene content (C2(SF)), as determined by FT-IR spectroscopy calibrated by quantitative $^{13}$C-NMR spectroscopy, in the range from 10.0 to 25.0 wt.-%, preferably 12.5 to 21.0 wt.-%; and
- said soluble fraction (SF) has an intrinsic viscosity (iV(SF)) of 0.50 to 1.50 dl/g, preferably from 0.80 to 1.20.

6. The composition according to any one of the preceding claims having units derived from ethylene in an amount of from 1.0 to 10.0 wt.-%, more preferably from 2.0 to 7.5 wt.-%, still more preferably from 3.5 to 5.0 wt.-%, based on the weight amount of monomer units in the composition.

7. The composition according to any one of the preceding claims having an intrinsic viscosity (iV(Comp)) of 1.00 to 2.00 dl/g, more preferably of 1.10 to 1.75 dl/g, most preferably of 1.20 to 1.50 dl/g.

8. The composition according to any one of the preceding claims having a tensile modulus of from 1350 MPa to 1750 MPa, preferably from 1400 MPa to 1600 MPa.

9. The composition according to any one of the preceding claims having a tensile strain at tensile strength of from 3.5 to 8.0%, preferably from 4.0 to 7.5 %, and/or a tensile strain at yield of from 4.5 MPa to 8.0 MPa, preferably from 5.0 MPa to 7.5 MPa, and/or a tensile strength of from 5.0 to 40%, preferably from 5.5 to 35%, and/or a tensile stress at break of from 25 to 40 MPa, preferably from 27 to 35 MPa, and/or a nominal tensile strain at break of from 5.0 to 12.5 MPa, preferably from 5.5 to 10.0 MPa.

10. The composition according to any one of the preceding claims having a Charpy Notched Impact Strength at 23 °C of from 1.5 kJ/m$^2$ to 5.0 kJ/m$^2$, preferably from 2.0 kJ/m$^2$ to 4.0 kJ/m$^2$ and/or a Charpy Notched Impact Strength at -20 °C of from 1.0 kJ/m$^2$ to 3.0 kJ/m$^2$, preferably from 1.2 kJ/m$^2$ to 2.5 kJ/m$^2$.

11. An article, preferably a moulded article or fiber reinforced composite, more preferably an automotive article comprising the composition according to any one of the preceding claims.

12. The article according to claim 11, wherein the composition further comprises glass fibers.

13. Use of the composition according to any one of claims 1 to 10 for the production of articles, preferably automotive articles, more preferably exterior automotive articles.

**14.** The use according to claim 13, wherein the composition further comprises glass fibers.


**Patentansprüche**

**1.** Zusammensetzung, erhältlich durch Mischen von mindestens den Komponenten (A), (B) und (C)

(A) 25 Gew.-% bis 75 Gew.-%, bevorzugt 35 bis 65 Gew.-%, besonders bevorzugt 40 bis 60 Gew.-% einer Polypropylen-Mischung aus gemischten Kunststoffen, die aus Post-Endverbraucher-Abfällen und/oder Industrieabfällen stammt;

(B) 17 Gew.-% bis 65 Gew.-%, bevorzugt 20 bis 55 Gew.-%, besonders bevorzugt 25 bis 50 Gew.-% eines ersten Propylen-Homopolymers und

(C) 3 Gew.-% bis 30 Gew.-%, bevorzugt 5 bis 27 Gew.-%, besonders bevorzugt 7 bis 25 Gew.-% eines zweiten Propylen-Homopolymers,

wobei sich alle Prozentangaben auf die Gesamtzusammensetzung beziehen, und wobei
die Polypropylen-Mischung (A) aus gemischten Kunststoffen folgende Merkmale hat:

- einen Gehalt an kristalliner Fraktion (CF), bestimmt nach der CRYSTEX QC-Analyse, im Bereich von 82,5 bis 96,0 Gew.-%, bevorzugt im Bereich von 84,0 bis 95,5 Gew.-%, und
- einen Gehalt an löslicher Fraktion. bestimmt nach der CRYSTEX QC-Analyse, im Bereich von 4,0 bis 17,5 Gew.-%, bevorzugt im Bereich von 4,5 bis 16,0 Gew.-%, wobei
- diese kristalline Fraktion (CF) einen Ethylengehalt (C2(CF)), wie durch FT-IR-Spektroskopie bestimmt und durch quantitative $^{13}$C-NMR-Spektroskopie kalibriert, im Bereich von 1,0 bis 12,5 Gew.-%, bevorzugt im Bereich von 1,5 bis 11,0 Gew.-%, aufweist; und
- diese lösliche Fraktion (SF) eine intrinsische Viskosität (iV(SF)) im Bereich von 0,9 bis unter 2,5 dl/g, bevorzugt im Bereich von 1,0 bis 2,3 dl/g, besonders bevorzugt im Bereich von 1,1 bis 2,2 dl/g aufweist;

das erste Propylen-Homopolymer (B) folgende Merkmale hat

- eine Schmelzflussrate MFR$_2$ (230°C, 2,16 kg, ISO 1133) von 500 bis 1100 g/lOmin, bevorzugt 650 bis 1000 g/10min, besonders bevorzugt 750 bis 900 g/10min; und

das zweite Propylen-Homopolymer (C) folgende Merkmale hat

- eine Schmelzflussrate MFR$_2$ (230°C, 2,16 kg, ISO 1133) von 80 bis 200 g/10min, bevorzugt 100 bis 175 g/10min, besonders bevorzugt 120 bis 150 g/10min; und
- einen Zugmodul von 1500 bis 2100 MPa, bevorzugt 1550 bis 2000 MPa, besonders bevorzugt 1600 bis 1900 MPa, und

die Zusammensetzung folgende Merkmale hat

- eine Schmelzflussrate MFR$_2$ (230°C, 2,16 kg, ISO 1133) von 50 bis 100 g/10min, bevorzugt 55 bis 95 g/10min, besonders bevorzugt 60 bis 90 g/10min.

**2.** Zusammensetzung nach Anspruch 1, erhältlich durch Mischen der Komponenten (A), (B), (C) und der folgenden Komponente (D)

(D) 0 Gew.-% bis 20 Gew.-%, bevorzugt 0 bis 15 Gew.-%, besonders bevorzugt 0 bis 13 Gew.-% eines dritten Propylen-Homopolymers;
wobei sich alle Prozentangaben auf die Gesamtzusammensetzung beziehen, und wobei
das dritte Propylen-Homopolymer (D) folgende Merkmale hat

- eine Schmelzflussrate MFR$_2$ (230°C, 2,16 kg, ISO 1133) von 10 bis 40 g/lOmin, bevorzugt 12 bis 30 g/10min, besonders bevorzugt 15 bis 25 g/10min; und
- einen Zugmodul von 2000 bis 2500 MPa, bevorzugt 2100 bis 2400 MPa, besonders bevorzugt 2150 bis 2300 MPa.

**3.** Zusammensetzung nach Anspruch 1 oder 2, erhältlich durch Mischen der Komponenten (A), (B) und (C), wobei (D) nicht vorhanden ist,

(A) 25 Gew.-% bis 75 Gew.-%, bevorzugt 35 bis 65 Gew.-%, besonders bevorzugt 40 bis 60 Gew.-% einer Polypropylen-Mischung aus gemischten Kunststoffen;
(B) 17 Gew.-% bis 65 Gew.-%, bevorzugt 20 bis 55 Gew.-%, besonders bevorzugt 25 bis 50 Gew.-% eines ersten Propylen-Homopolymers und
(C) 3 Gew.-% bis 30 Gew.-%, bevorzugt 5 bis 27 Gew.-%, besonders bevorzugt 7 bis 25 Gew.-% eines zweiten Propylen-Homopolymers,

wobei sich alle Prozentangaben auf die Gesamtzusammensetzung beziehen.

4. Zusammensetzung nach Anspruch 1 oder 2, erhältlich durch Mischen der Komponenten (A), (B), (C) und (D),

(A) 25 Gew.-% bis 75 Gew.-%, bevorzugt 35 bis 65 Gew.-%, besonders bevorzugt 40 bis 60 Gew.-% einer Polypropylen-Mischung aus gemischten Kunststoffen;
(B) 17 Gew.-% bis 55 Gew.-%, bevorzugt 20 bis 45 Gew.-%, besonders bevorzugt 25 bis 40 Gew.-% eines ersten Propylen-Homopolymers;
(C) 3 Gew.-% bis 30 Gew.-%, bevorzugt 5 bis 27 Gew.-%, besonders bevorzugt 7 bis 25 Gew.-% eines zweiten Propylen-Homopolymers; und
(D) 1 Gew.-% bis 20 Gew.-%, bevorzugt 2 bis 15 Gew.-%, besonders bevorzugt 3 bis 13 Gew.-% eines dritten Propylen-Homopolymers,

wobei sich alle Prozentangaben auf die Gesamtzusammensetzung beziehen.

5. Die Zusammensetzung nach einem der vorhergehenden Ansprüche mit

- einem Gehalt an kristalliner Fraktion (CF), bestimmt nach der CRYSTEX QC-Analyse, im Bereich von 90,0 bis 97,5 Gew.-%, bevorzugt 92,5 bis 95,0 Gew.-%, und
- einem Gehalt an löslicher Fraktion (SF), bestimmt nach CRYSTEX QC-Analyse, im Bereich von 2,5 bis 10,0 Gew.-%, bevorzugt 5,0 bis 7,5 Gew.-%, wobei
- diese kristalline Fraktion (CF) einen Ethylengehalt (C2(CF)), wie durch FT-IR-Spektroskopie bestimmt und durch quantitative $^{13}$C-NMR-Spektroskopie kalibriert, von 1,5 bis 9,0 Gew.-%, bevorzugt 3,0 bis 4,5 Gew.-% aufweist;
- diese kristalline Fraktion (CF) eine intrinsische Viskosität (iV(CF)) von 1,00 bis 2,00 dl/g, bevorzugt von 1,10 bis 1,50 dl/g aufweist;
- diese lösliche Fraktion (SF) einen Ethylengehalt (C2(SF)), wie durch FT-IR-Spektroskopie bestimmt und durch quantitative $^{13}$C-NMR-Spektroskopie kalibriert, im Bereich von 10,0 bis 25,0 Gew.-%, bevorzugt 12,5 bis 21,0 Gew.-%, aufweist; und
- diese lösliche Fraktion (SF) eine intrinsische Viskosität (iV(SF)) von 0,50 bis 1,50 dl/g, bevorzugt von 0,80 bis 1,20 aufweist.

6. Zusammensetzung nach einem der vorhergehenden Ansprüche mit von Ethylen abgeleiteten Einheiten in einer Menge von 1,0 bis 10,0 Gew.-%, besonders bevorzugt von 2,0 bis 7,5 Gew.-%, noch bevorzugter von 3,5 bis 5,0 Gew.-%, bezogen auf die Gewichtsmenge der Monomereinheiten in der Zusammensetzung.

7. Zusammensetzung nach einem der vorhergehenden Ansprüche mit einer intrinsischen Viskosität (iV(Comp)) von 1,00 bis 2,00 dl/g, besonders bevorzugt von 1,10 bis 1,75 dl/g, am meisten bevorzugt von 1,20 bis 1,50 dl/g.

8. Die Zusammensetzung nach einem der vorangehenden Ansprüche mit einem Zugmodul von 1350 MPa bis 1750 MPa, bevorzugt von 1400 MPa bis 1600 MPa.

9. Zusammensetzung nach einem der vorhergehenden Ansprüche mit einer Zugdehnung bei Zugfestigkeit von 3,5 bis 8,0 %, bevorzugt von 4,0 bis 7,5 %, und/oder einer Zugdehnung bei Streckung von 4,5 MPa bis 8,0 MPa, bevorzugt von 5,0 MPa bis 7,5 MPa, und/oder einer Zugfestigkeit von 5,0 bis 40 %, bevorzugt von 5,5 bis 35 %, und/oder einer Bruchspannung von 25 bis 40 MPa, bevorzugt von 27 bis 35 MPa, und/oder einer nominellen Bruchdehnung von 5,0 bis 12,5 MPa, bevorzugt von 5,5 bis 10,0 MPa.

10. Die Zusammensetzung nach einem der vorhergehenden Ansprüche mit einer Charpy-Kerbschlagzähigkeit bei 23 °C von 1,5 kJ/m² bis 5,0 kJ/m², bevorzugt von 2,0 kJ/m² bis 4,0 kJ/m² und/oder eine Charpy-Kerbschlagzähigkeit bei -20 °C von 1,0 kJ/m² bis 3,0 kJ/m², vorzugsweise von 1,2 kJ/m² bis 2,5 kJ/m².

**11.** Gegenstand, bevorzugt ein Formteil oder ein faserverstärkter Verbundstoff, besonders bevorzugt ein Gegenstand für die Automobilindustrie, der die Zusammensetzung nach einem der vorhergehenden Ansprüche enthält.

**12.** Gegenstand nach Anspruch 11, wobei die Zusammensetzung außerdem Glasfasern enthält.

**13.** Verwendung der Zusammensetzung nach einem der Ansprüche 1 bis 10 zur Herstellung von Gegenständen, vorzugsweise Gegenstände für die Automobilindustrie, insbesondere Gegenstände für die Automobilindustrie in Außenbereich.

**14.** Verwendung nach Anspruch 13, wobei die Zusammensetzung außerdem Glasfasern enthält.

**Revendications**

**1.** Composition pouvant être obtenue par combinaison au moins de composants (A), (B) et (C)

(A) 25 % en poids à 75 % en poids, de préférence 35 à 65 % en poids, plus préférablement 40 à 60 % en poids d'une combinaison de polypropylène à matières plastiques mélangées, qui provient de déchets post-consommation et/ou déchets industriels ;
(B) 17 % en poids à 65 % en poids, de préférence 20 à 55 % en poids, plus préférablement 25 à 50 % en poids d'un premier homopolymère de propylène ; et
(C) 3 % en poids à 30 % en poids, de préférence 5 à 27 % en poids, plus préférablement 7 à 25 % en poids d'un deuxième homopolymère de propylène,
tous les pourcentages faisant référence à la composition totale, et moyennant quoi
la combinaison de polypropylène à matières plastiques mélangées (A) a

- une teneur en fraction cristalline (CF) déterminée selon une analyse CRYSTEX QC dans la plage de 82,5 à 96,0 % en poids, de préférence dans la plage de 84,0 à 95,5 % en poids, et
- une teneur en fraction soluble (SF) déterminée selon l'analyse CRYSTEX QC dans la plage de 4,0 à 17,5 % en poids, de préférence dans la plage de 4,5 à 16,0 % en poids, moyennant quoi
- ladite fraction cristalline (CF) a une teneur en éthylène (C2(CF)), telle que déterminée par spectroscopie FT-IR calibrée par spectroscopie quantitative $^{13}$C-RMN, dans la plage de 1,0 à 12,5 % en poids, de préférence dans la plage de 1,5 à 11,0 % en poids ; et
- ladite fraction soluble (SF) a une viscosité intrinsèque (iV(SF)) dans la plage de 0,9 à moins de 2,5 dl/g, de préférence dans la plage de 1,0 à 2,3 dl/g, plus préférablement dans la plage de 1,1 à 2,2 dl/g ;

le premier homopolymère de propylène (B) a

- un indice de fusion MFR$_2$ (230 °C, 2,16 kg, ISO 1133) de 500 à 1100 g/10 min, de préférence de 650 à 1000 g/10 min, plus préférablement de 750 à 900 g/10 min ; et

le deuxième homopolymère de propylène (C) a

- un indice de fusion MFR$_2$ (230 °C, 2,16 kg, ISO 1133) de 80 à 200 g/10 min, de préférence de 100 à 175 g/10 min, plus préférablement de 120 à 150 g/10 min ; et
- un module de traction de 1500 à 2100 MPa, de préférence de 1550 à 2000 MPa, plus préférablement de 1600 à 1900 MPa, et

la composition a

- un indice de fusion MFR$_2$ (230 °C, 2,16 kg, ISO 1133) de 50 à 100 g/10 min, de préférence de 55 à 95 g/10 min, plus préférablement de 60 à 90 g/10 min.

**2.** Composition selon la revendication 1, pouvant être obtenue par combinaison des composants (A), (B), (C) et du composant suivant (D)

(D) 0 % en poids à 20 % en poids, de préférence 0 à 15 % en poids, plus préférablement 0 à 13 % en poids d'un troisième homopolymère de propylène ;
moyennant quoi tous les pourcentages font référence à la composition totale, et moyennant quoi le troisième homopolymère de propylène (D) a

- un indice de fluidité $MFR_2$ (230 °C, 2,16 kg, ISO 1133) de 10 à 40 g/10 min, de préférence 12 à 30 g/10 min, plus préférablement 15 à 25 g/10 min ; et
- un module de traction de 2000 à 2500 MPa, de préférence 2100 à 2400 MPa, plus préférablement 2150 à 2300 MPa.

3. Composition selon les revendications 1 ou 2, pouvant être obtenue par combinaison des composants (A), (B) et (C), (D) n'étant pas présent,

(A) 25 % en poids à 75 % en poids, de préférence 35 à 65 % en poids, plus préférablement 40 à 60 % en poids d'une combinaison de polypropylène à matières plastiques mélangées ;
(B) 17 % en poids à 65 % en poids, de préférence 20 à 55 % en poids, plus préférablement 25 à 50 % en poids d'un premier homopolymère de propylène ; et
(C) 3 % en poids à 30 % en poids, de préférence 5 à 27 % en poids, plus préférablement 7 à 25 % en poids d'un deuxième homopolymère de propylène,

moyennant quoi tous les pourcentages font référence à la composition totale.

4. Composition selon les revendications 1 ou 2, pouvant être obtenue par combinaison des composants (A), (B), (C) et (D),

(A) 25 % en poids à 75 % en poids, de préférence 35 à 65 % en poids, plus préférablement 40 à 60 % en poids d'un mélange de polypropylène à matières plastiques mélangées ;
(B) 17 % en poids à 55 % en poids, de préférence 20 à 45 % en poids, plus préférablement 25 à 40 % en poids d'un premier homopolymère de propylène ;
(C) 3 % en poids à 30 % en poids, de préférence 5 à 27 % en poids, plus préférablement 7 à 25 % en poids d'un deuxième homopolymère de propylène ; et
(D) 1 % en poids à 20 % en poids, de préférence 2 à 15 % en poids, plus préférablement 3 à 13 % en poids d'un troisième homopolymère de propylène,

moyennant quoi tous les pourcentages font référence à la composition totale.

5. Composition selon l'une des revendications précédentes ayant

- une teneur en fraction cristalline (CF) déterminée selon l'analyse CRYSTEX QC dans la plage de 90,0 à 97,5 % en poids, de préférence 92,5 à 95,0 % en poids, et
- une teneur en fraction soluble (SF) déterminée selon l'analyse CRYSTEX QC dans la plage de 2,5 à 10,0 % en poids, de préférence 5,0 à 7,5 % en poids, moyennant quoi
- ladite fraction cristalline (CF) a une teneur en éthylène (C2(CF)), telle que déterminée par spectroscopie FT-IR calibrée par spectroscopie quantitative $^{13}$C-RMN, de 1,5 à 9,0 % en poids%, de préférence 3,0 à 4,5 % en poids ;
- ladite fraction cristalline (CF) a une viscosité intrinsèque (iV(CF)) de 1,00 à 2,00 dl/g, de préférence 1,10 à 1,50 dl/g ;
- ladite fraction soluble (SF) a une teneur en éthylène (C2(SF)), telle que déterminée par spectroscopie FT-IR calibrée par spectroscopie quantitative $^{13}$C-RMN, dans la plage de 10,0 à 25,0 % en poids, de préférence 12,5 à 21,0 % en poids ; et
- ladite fraction soluble (SF) a une viscosité intrinsèque (iV(SF)) de 0,50 à 1,50 dl/g, de préférence 0,80 à 1,20.

6. Composition selon l'une des revendications précédentes ayant des unités dérivées d'éthylène selon une quantité de 1,0 à 10,0 % en poids, plus préférablement de 2,0 à 7,5 % en poids, encore plus préférablement de 3,5 à 5,0 % en poids, sur la base de la quantité en poids d'unités monomères dans la composition.

7. Composition selon l'une des revendications précédentes ayant une viscosité intrinsèque (iV(Comp)) de 1,00 à 2,00 dl/g, plus préférablement de 1,10 à 1,75 dl/g, de manière la plus préférée de 1,20 à 1,50 dl/g.

8. Composition selon l'une des revendications précédentes ayant un module de traction allant de 1350 MPa à 1750 MPa, de préférence de 1400 MPa à 1600 MPa.

9. Composition selon l'une des revendications précédentes ayant une déformation en traction à une résistance à la traction de 3,5 à 8,0 %, de préférence de 4,0 à 7,5 %, et/ou une déformation en traction à une élasticité de 4,5 MPa à 8,0 MPa, de préférence de 5,0 MPa à 7,5 MPa, et/ou une résistance à la traction de 5,0 à 40 %, de préférence de 5,5 à 35 %, et/ou une contrainte de traction à la rupture de 25 à 40 MPa, de préférence de 27 à 35 MPa, et/ou une déformation nominale en traction à la rupture de 5,0 à 12,5 MPa, de préférence de 5,5 à 10,0 MPa.

10. Composition selon l'une des revendications précédentes ayant une résistance aux chocs Charpy sur éprouvette entaillée à 23 °C allant de 1,5 kJ/m$^2$ à 5,0 kJ/m$^2$, de préférence de 2,0 kJ/m$^2$ à 4,0 kJ/m$^2$ et/ou une résistance aux chocs Charpy sur éprouvette entaillée à -20 °C de 1,0 kJ/m$^2$ à 3,0 kJ/m$^2$, de préférence de 1,2 kJ/m$^2$ à 2,5 kJ/m$^2$.

11. Article, de préférence article moulé ou composite renforcé de fibres, plus préférablement article automobile comprenant la composition selon l'une des revendications précédentes.

12. Article selon la revendication 11, dans lequel la composition comprend en outre des fibres de verre.

13. Utilisation de la composition selon l'une des revendications 1 à 10 pour la production d'articles, de préférence d'articles automobiles, plus préférablement d'articles automobiles extérieurs.

14. Utilisation selon la revendication 13, dans laquelle la composition comprend en outre des fibres de verre.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2960279 B1

**Non-patent literature cited in the description**

- **SINGH, G. ; KOTHARI, A. ; GUPTA, V.** *Polymer Testing,* 2009, vol. 28 (5), 475
- **ZHOU, Z. et al.** *J. Mag. Reson.,* 2007, vol. 187, 225
- **BUSICO, V et al.** *Macromol. Rapid Commun.,* 2007, vol. 28, 1128
- **CHENG, H. N.** 17. *Macromolecules,* 1984, 1950
- **HEINO, E.L. ; LEHTINEN, A. ; TANNER J. ; SEP-PÄLÄ, J. ; NESTE OY ; PORVOO, FINLAND.** Rheological characterization of polyethylene fractions. *Theor. Appl. Rheol., Proc. Int. Congr. Rheol,* 1992, vol. 1, 360-362
- **HEINO, E.L.** The influence of molecular structure on some rheological properties of polyethylene. *Borealis Polymers Oy, Porvoo, Finland, Annual Transactions of the Nordic Rheology Society,* 1995
- Definition of terms relating to the non-ultimate mechanical properties of polymers. *Pure & Appl. Chem.,* 1998, vol. 70 (3), 701-754